# EUROPÄISCHE PATENTSCHRIFT

(11) **EP 0 529 128 B1**
(45) Veröffentlichungstag und Bekanntmachung des Hinweises auf die Patenterteilung: **18.10.1995**
(21) Anmeldenummer: 91114474.9
(22) Anmeldetag: 28.08.1991
(51) Int. Cl.: G21C 3/12

(54) **Kernreaktorbrennelement mit Blattfedern**
Fuel bundle for nuclear reactor with leaf springs
Assemblage combustible pour réacteur nucléaire avec ressorts à lames

(43) Veröffentlichungstag der Anmeldung: 03.03.1993
(73) Patentinhaber: SIEMENS AKTIENGESELLSCHAFT, 80333 München (DE)
(72) Erfinder: Beuerlein, Bernd, Dipl.-Ing., W-8520 Erlangen (DE)

(56) Entgegenhaltungen:
- FR-A- 2 605 448
- US-A- 4 792 429
- US-A- 4 986 960
- PATENT ABSTRACTS OF JAPAN vol. 15, no. 180 (P-1199) 9. Mai 1991 ; & JP-A-3 039 693

## Beschreibung

Die Erfindung betrifft ein Kernreaktorbrennelement nach dem Oberbegriff des Patentanspruchs.

Ein derartiges Kernreaktorbrennelement ist bereits üblich. In einem Kernreaktor ist dieses Kernreaktorbrennelement mit vertikal gerichteten Brennstäben angeordnet. Die untere Endplatte steht auf einem unteren Kerngitter innerhalb des Kernreaktors auf, während eine zur unteren Kerngitterplatte parallele obere Kerngitterplatte an der Blattfeder am Scheitel des von dieser Blattfeder gebildeten spitzen Winkels anliegt und das Kernreaktorbrennelement unter Verformung dieser Blattfeder gegen die untere Kerngitterplatte preßt. Auf diese Weise hat das Kernreaktorbrennelement zwischen unterer und oberer Kerngitterplatte einen federnd stabilen Sitz.

Das Kernreaktorbrennelement wird im Kernreaktor der Länge nach von unten nach oben von einem Kühlmittel durchströmt, in dem das Kernreaktorbrennelement die Neigung zum Aufschwimmen hat. Dieses Aufschwimmen wird durch die Federkraft der Blattfeder auf der Außenseite der oberen Endplatte des Kernreaktorbrennelements verhindert.

Durch nachträgliche Veränderungen an dem dem Kernreaktor nachgeschalteten äußeren Primärsystem kann sich jedoch nachträglich eine Kühlmittelströmung durch das Kernreaktorbrennelement ergeben, die die Bestrebung des Kernreaktorbrennelements zum Aufschwimmen erheblich verstärkt. Die von der Blattfeder auf das Kernreaktorbrennelement ausgeübte Federkraft reicht dann unter Umständen nicht mehr aus, dieses Aufschwimmen zu verhindern.

Aus US-A-4 792 429 ist schon ein Kernreaktorbrennelement mit Blattfedern zur Verhinderung des Aufschwimmens eines Kernreaktorbrennelementes bekannt, wobei eine zusätzliche Blattfeder vorhanden ist.

Der Erfindung liegt die Aufgabe zugrunde, das bekannte Kernreaktorbrennelement dahingehend weiterzubilden, daß sein Aufschwimmen auch in verstärkten Kühlmittel-Strömungen innerhalb eines Kernreaktors vermieden wird.

Zur Lösung dieser Aufgabe hat ein Kernreaktorbrennelement der eingangs erwähnten Art erfindungsgemäß die Merkmale des kennzeichnenden Teils des Patentanspruchs.

Die Zusatzblattfeder wirkt parallel zur Blattfeder und verstärkt so die gegen die Strömung des Kühlmittels im Kernreaktor wirkende Federkraft.

Die Zusatzfeder eignet sich auch besonders gut zum Nachrüsten bereits in einem Kernreaktor eingesetzter Kernreaktorbrennelemente.

Die Erfindung und ihre Vorteile seien anhand der Zeichnung an einem Ausführungsbeispiel näher erläutert:
- FIG 1: zeigt eine teilweise geschnittene Seitenansicht der oberen Endplatte eines Kernreaktorbrennelements und
- FIG 2: zeigt eine Draufsicht auf die obere Endplatte nach Figur 1.

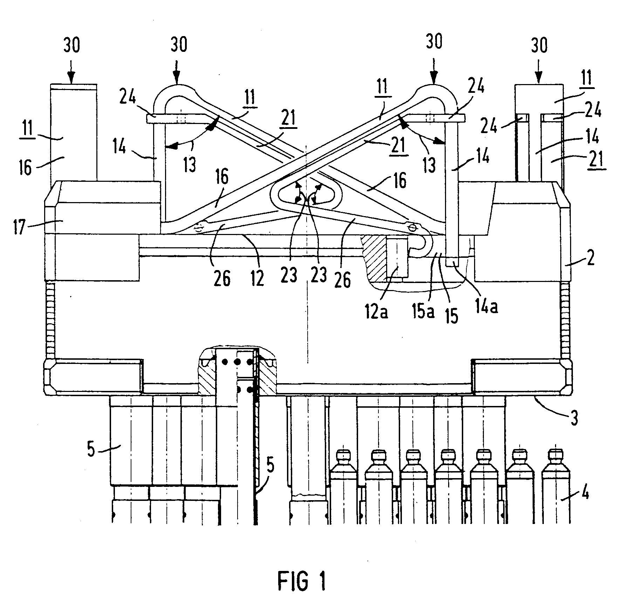

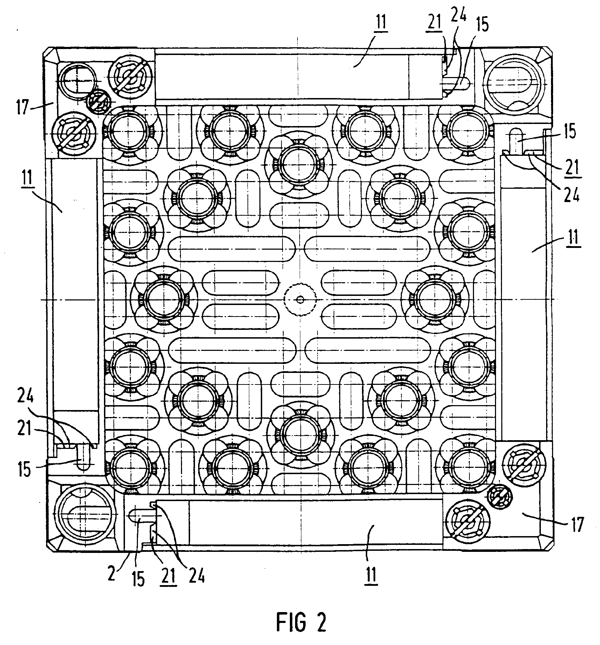

Wie Figur 1 und 2 zeigen, sind an der Innenseite 3 der oberen Endplatte 2 Brennstäbe 4 angeordnet, die mit Kernbrennstoff gefüllt sind und deren Längsachsen rechtwinklig zur Innenseite 3 dieser oberen Gitterplatte 2 sind. Während die Enden dieser Brennstäbe 4 Abstand von dieser Innenseite 3 haben, sind zu den Brennstäben 4 parallele Steuerstabführungsrohre 5 sowohl an der Innenseite 3 der oberen Endplatte 2 als auch an der Innenseite der nicht dargestellten unteren Endplatte festgeschraubt. Die Enden der Brennstäbe 4 an dieser unteren Endplatte haben ebenfalls Abstand von der Innenseite dieser unteren Endplatte. Die Steuerstabführungsrohre 5 sind jeweils durch eine Masche von nicht dargestellten gitterförmigen Abstandhaltern geführt, die sich zwischen den beiden Endplatten befinden und formschlüssig an einzelnen Steuerstabführungsrohren befestigt sind. Jeder Brennstab 4 ist ebenfalls jeweils durch eine Masche der gitterförmigen Abstandhalter geführt und mit Hilfe von Druckfedern innerhalb dieser Masche kraftschlüssig gehaltert.

Die obere Endplatte 2 hat quadratischen Querschnitt, und an jeder Kante der Außenseite 12 der oberen Endplatte 2 ist eine Blattfeder 11 angeordnet. Eine solche Blattfeder 11 ist in einem spitzen Winkel 13 gebogen. Ein erster Schenkel 14 der Blattfeder 11 steht rechtwinklig auf der Außenseite 12 der Endplatte 2 auf und greift dort lose in eine langgestreckte Führungsnut 15 in der Außenseite 12. Die Längsrichtung dieser Führungsnut 15 ist parallel zu der Kante der Außenseite 12, an der sich die Blattfeder 11 befindet. Der zweite Schenkel 16 der Blattfeder 11 trifft mit seinem Ende unter einem spitzen Winkel auf die Außenseite 12 der oberen Endplatte 2. Dieses Ende ist zwischen der Außenseite 16 und einem auf dieser Außenseite festgeschraubten Winkelteil 17 eingespannt und damit starr gehaltert. Beide Schenkel 14 und 16 bestimmen eine zur Kante der Außenseite 12, an der sich die Blattfeder 11 befindet, parallele Ebene. Diese Ebene ist auch rechtwinklig zu dieser Außenseite 12.

Eine Zusatzblattfeder 21 ist ebenfalls in einem spitzen Winkel 23 gebogen. Sie ist zwischen den beiden Schenkeln 14 und 16 der Blattfeder 11 angeordnet. An einem Ende 24 ist die Zusatzblattfeder 21 gegabelt und umklammert lose mit der Gabelung den Schenkel 14 der Blattfeder 11. Am anderen Ende 26 ist die Zusatzblattfeder 21 in der von den Schenkeln 14 und 16 bestimmten Ebene hakenförmig nach außen gebogen und auf die Breite des Schenkels 14 der Blattfeder 11 reduziert. Mit diesem hakenförmig gebogenen Ende greift die Zusatzblattfeder 26 lose in die langgestreckte Führungsnut 15.

Zur Montage der Blattfeder 11 wird zunächst ihr Schenkel 14, der am Ende eine Querstrebe 14a aufweist, mit diesem Ende durch eine Einschubbohrung 12a in die Führungsnut 15 eingeschoben und von der Einschubbohrung 12a weg bewegt, so daß die Querstrebe 14a eine Schulter 15a hintergreift, die die Führungsnut 15 an der Oberfläche der Außenseite 12 verengt. Sodann wird das andere Ende 16 der Blattfeder 11 durch Aufschrauben des Winkelteils 17 auf der Außenseite 12 der oberen Endplatte 2 starr an dieser Außenseite 12 befestigt. Hierbei ergibt sich eine Vorspannung der Feder 11.

Zur Montage der Zusatzblattfeder 21 wird diese durch Verengen des Abstands ihrer beiden Schenkel 24 und 26 vorgespannt. Diese so vorgespannte Zuatzblattfeder 21 wird sodann zwischen dem Schenkel 16 der Blattfeder 11 und der Außenseite 12 der oberen Endplatte 2 eingesetzt. Hierauf werden die beiden Schenkel 21 und 26 freigegeben, so daß der Schenkel 26 mit seinem hakenförmig gekrümmten Ende zwischen die Schultern 15a der langgestreckten Führungsnut 15 und der Schenkel 14 der Blattfeder 11 zwischen der Gabelung am Ende 24 der Zusatzblattfeder 21 einrasten.

Die Pfeile 30 symbolisieren die Kräfte, mit denen die obere Kerngitterplatte in einem Kernreaktor das Kernreaktorbrennelement in Richtung der Längsachsen der Brennstäbe 4 gegen die untere Kerngitterplatte presst. Unter Einwirkung dieser Kräfte verschiebt sich der Schenkel 14 jeder der vier Blattfedern 11 unter Vergrößerung der Vorspannung der betreffenden Blattfeder 11 in der jeweiligen Führungsnut 15 weg von dem an der Außenseite 12 starr befestigten Ende des anderen Schenkels 16 der betreffenden Blattfeder 11. Zugleich verringert sich der Abstand der Schenkel 24 und 26 der Zusatzblattfedern 21. Diese werden dadurch ebenfalls vorgespannt und wirken mit ihrer Federkraft parallel zu der Federkraft der Blattfedern 11.

## Patentansprüche

1. Kernreaktorbrennelement mit zwei Endplatten, zwischen deren Innenseiten langgestreckte, mit Kernbrennstoff gefüllte Brennstäbe (4) mit zu den Innenseiten rechtwinkligen Längsachsen angeordnet sind, sowie mit einer an der Außenseite (12) einer Endplatte (2) befindlichen, in einem spitzen Winkel (13) gebogenen Blattfeder (11), die mit einem zur Außenseite (12) dieser Endplatte (2) im wesentlichen rechtwinkligen ersten Schenkel (14) lose in eine langgestreckte Führungsnut (15) in dieser Endplatte (2) greift und die mit einem zweiten Schenkel (16), dessen Längsrichtung mit der Längsrichtung des ersten Schenkels (14) und mit der Längsrichtung der Führungsnut (15) eine Ebene bildet, unter einem spitzen Winkel auf die Außenseite (12) dieser Endplatte (2) trifft und mit dem Ende dieses zweiten Schenkels (16) starr an der Außenseite (12) dieser Endplatte (2) befestigt ist,
**dadurch gekennzeichnet**,
daß eine Zusatzblattfeder (21), die ebenfalls in einem spitzen Winkel (23) gebogen ist, sich zwischen den beiden Schenkeln (14; 16) der Blattfeder (11) befindet und mit einem Ende (26) lose in die Führungsnut (15) eingreift und mit dem anderen Ende (24) am ersten Schenkel (14) der Blattfeder (11) lose geführt ist.

## Claims

1. Nuclear reactor fuel element having two end plates, arranged between the inner surfaces of which there are elongated fuel rods (4) filled with nuclear fuel and having longitudinal axes which are perpendicular to the inner surfaces, and also having a leaf spring (11) which is located on the outer surface (12) of an end plate (2), is bent at an acute angle (13), and with a first leg (14), which is substantially perpendicular to the outer surface (12) of this end plate (2), engages loosely into an elongated guide groove (15) in this end plate (2) and with a second leg (16), the longitudinal direction of which with the longitudinal direction of the first leg (14) and with the longitudinal direction of the guide groove (15) establishes a plane, meets with the outer surface (12) of this end plate (2) at an acute angle and with the end of this second leg (16) is rigidly secured to the outer surface (12) of this end plate (2), characterised in that a supplementary leaf spring (21), which is likewise bent at an acute angle (23), is located between the two legs (14; 16) of the leaf spring (11) and with one end (26) engages loosely into the guide groove (15) and with the other end (24) is guided loosely on the first leg (14) of the leaf spring (11).

## Revendications

1. Assemblage combustible de réacteur nucléaire comprenant deux embouts, entre les côtés intérieurs desquels sont disposés des crayons (4) combustibles oblongs, remplis de combustible nucléaire, et dont les axes longitudinaux sont perpendiculaires aux côtés intérieurs, ainsi qu'un ressort (11) à lame, se trouvant du côté (12) extérieur d'un embout (2) et coudé suivant un angle aigu, ce ressort à lame pénétrant de manière lache dans une rainure (15) de guidage s'étendant en longueur dans l'embout (2) par l'intermédiaire d'une première branche (14) faisant sensiblement un angle droit avec le côté (12) extérieur de l'embout (2), et ayant une seconde branche (16), qui définit, avec la direction longitudinale de la rainure (15) de guidage et la direction longitudinale de la première branche, un plan, qui coupe le côté extérieur de l'embout (2) selon un angle aigu et qui est fixée rigidement à son extrémité au côté (12) extérieur de l'embout (2), caractérisé en ce qu'un ressort (21) à lame supplémentaire, qui est également coudé suivant un angle aigu, se trouve entre les deux branches (14,16) du ressort (11) à lame et pénètre de manière lache dans la rainure (15) de guidage par une extrémité (26) et est guidée de manière lache par l'autre extrémité (24) sur la première branche (14) du ressort (11) à lame.
